**Europäisches Patentamt**

**European Patent Office**

**Office européen des brevets**

(11) Publication number: **0 091 606**
**B1**

# (12) EUROPEAN PATENT SPECIFICATION

(45) Date of publication of patent specification: **07.02.90**

(21) Application number: **83103141.4**

(22) Date of filing: **30.03.83**

(51) Int. Cl.⁵: **H 02 H 3/38**

(54) **Distance relay.**

(30) Priority: **12.04.82 JP 62145/82**

(43) Date of publication of application:
**19.10.83 Bulletin 83/42**

(45) Publication of the grant of the patent:
**07.02.90 Bulletin 90/06**

(84) Designated Contracting States:
**CH GB LI SE**

(56) References cited:
**CH-A- 402 134**
**GB-A-1 222 360**
**US-A-4 034 269**

(73) Proprietor: **MITSUBISHI DENKI KABUSHIKI KAISHA**
**2-3, Marunouchi 2-chome Chiyoda-ku Tokyo 100 (JP)**

(72) Inventor: **Miyake, Yasuaki c/o MITSUBISHI DENKI K.K.**
**Power and Ind. Syst. 1-2, Wadasakicho 1 chome Hyogo-ku Kobe-shi Hyogo (JP)**
Inventor: **Isahaya, Keiji c/o MITSUBISHI DENKI K.K.**
**Power and Ind. Syst. 1-2, Wadasakicho 1-chome Hyogo-ku Kobe-shi Hyogo (JP)**

(74) Representative: **Eisenführ & Speiser**
**Martinistrasse 24**
**D-2800 Bremen 1 (DE)**

The file contains technical information submitted after the application was filed and not included in this specification

## Description

The present invention relates to a distance relay having transformer means which has a predetermined impedance, which introduces a current signal from a circuit portion that is to be protected in a power system, and which derives a first voltage signal consisting of the product of said impedance and said current signal; arithmetic means which combines a second voltage signal derived from the voltage of the power system and said first voltage signal for deriving a third voltage signal; memory means which holds said second voltage signal; and decision means which generates a protective signal for initiating the protective operation of the system when a phase difference between the output from said memory means and said third voltage signal is greater than a predetermined value and lasts for more than a first predetermined period of time.

In detecting, via a voltage divider consisting of capacitors, the voltage signal of the power system to which a distance relay is provided, it has been known that a d-c component is superposed on the voltage signals if any fault develops in the vicinity of the voltage divider. Such a d-c component may cause the relay to operate erroneously.

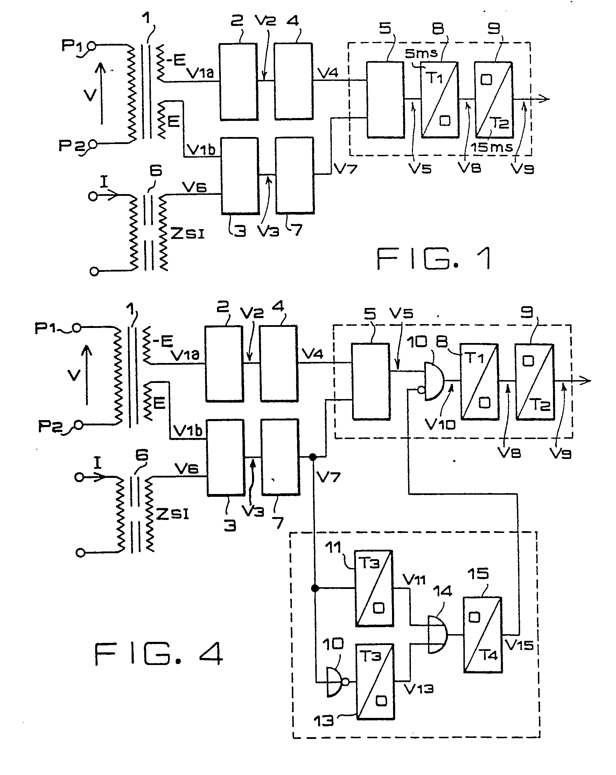

Fig. 1 is a block diagram illustrating a conventional distance relay. A similar distance relay is known from US—A—4034269). A voltage signal V which represents the voltage of a portion of the power system, is applied across terminals $P_1$ and $P_2$ on the primary side of a voltage input transformer 1, and voltage signal $V_{1a}$ (= −E) and $V_{1b}$ (= E) on the secondary side of it are applied to an input of a memory 2 and to a first input of an adder 3 respectively. The memory 2 has a memory function which holds its input and continuously supply it as a output signal $V_2$ (= −$E_M$) to a rectangular waveform shaper 4 even when the signals $V_{1a}$ are interrupted, i.e., even when the signal $V_{1a}$ assume zero volt. The rectangular waveform shaper 4 therefore provides rectangular waveform signal $V_4$ to the first input of an exclusive OR gate 5.

A gap transformer 6, on the other hand, introduces, through the primary side, a current signal I which is related with a voltage signal V from the power system, and produces, from the secondary side, a voltage signal $V_6$ which is given by $Z_sI$ that is proportional to the product of a predetermined impedance $Z_s$ of the transformer and a current signal I. The voltage signal $V_6$ is applied to the second input of the adder 3 which sends a sum signal $V_3$ having a content $E−Z_sI$ to a rectangular waveform shaper 7. The rectangular waveform shaper 7 is constructed in the same manner as the rectangular waveform shaper 4, and converts the signal $V_3$ into a rectangular waveform signal $V_7$ which is applied to the second input of the exclusive OR gate 5. The exclusive OR gate 5 executes the exclusive OR operation between the signal $V_4$ and $V_7$ and sends a resulting signal $V_5$ to a timer 8 which delays the signal by a time $T_1$ (for example, 10 milliseconds, which is equal to one-half cycle of a voltage signal V of a frequency of 50 Hz). An output signal $V_8$ of the timer 8 is then sent to a timer 9 which has a delay time $T_2$ (for example, 15 milliseconds consisting of the time $T_1$ plus a marginal time of 5 milliseconds) for restoration and which generates a final output signal $V_9$ which is used to initiate the protective operation for the system. The gate 5 and timers 8, 9 surround by a dotted line, therefore, comprise a decision circuit for the signals.

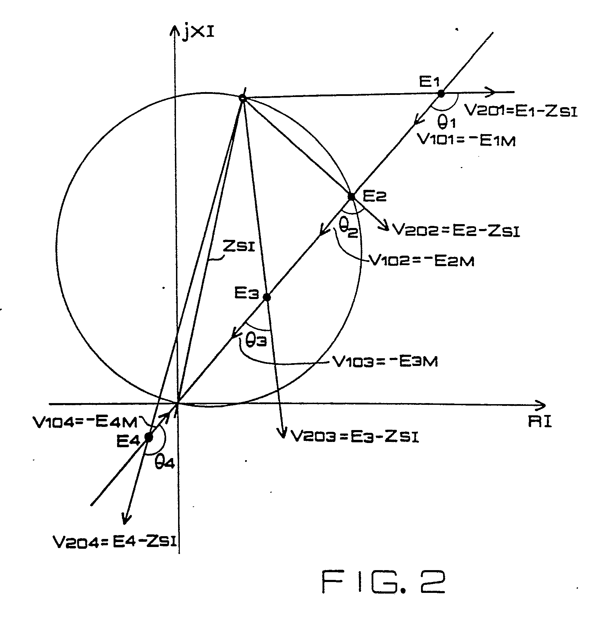

Fig. 2 is a vector diagram which illustrates operational characteristics of the conventional device of Fig. 1. In Fig. 2, the abscissa represents the product of R in the impedance R + jX and a current signal I, and the coordinate represents the product of jX and a current signal I. The device has the operation modes, as described below. Here, however, $V_{101}$ to $V_{104}$, $V_{201}$ to $V_{204}$ and $E_1$ to $E_4$ denote vector values of voltage signal V, as given by the following formulas:

(a) When a fault has developed in an external portion in front of the distance relay (defect voltage $E_1$),
$$V_{101} = -E_{1M}$$
$$V_{201} = E_1 - Z_sI$$
In this case, the phase different $\theta_1$ becomes greater than 90°, and the relay becomes inoperative.

(b) When a fault has developed at a limit point (fault voltage $E_2$),
$$V_{102} = -E_{2M}$$
$$V_{202} = E_2 - Z_sI$$
In this case, the phase difference $\theta_2$ is 90°, and the relay is placed at a limit point.

(c) When a fault has developed in an internal portion (fault voltage $E_3$),
$$V_{103} = -E_{3M}$$
$$V_{203} = E_3 - Z_sI$$
In this case, the phase different $\theta_3$ is smaller than 90°, and the relay operates.

(d) When a fault has developed in an external portion at the back of the distance relay in the vicinity thereof (defect voltage $E_4$ = 0),
$$V_{104} = -E_{4M}$$
$$V_{204} = E_4 - Z_sI$$
In this case, the phase difference $\theta_4$ is greater than 90°, and the relay becomes inoperative. That is, operation phase characteristics of the relay describe a circle with the impedance $Z_sI$ as a diameter.

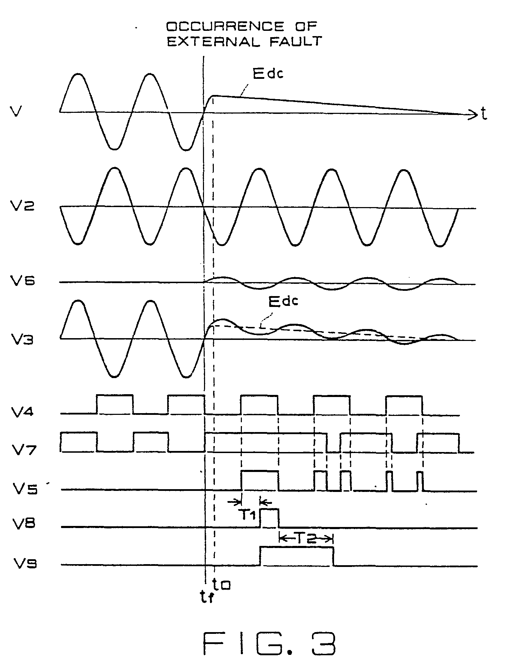

Fig. 3 is a diagram illustrating signal waveforms at each of the portions of the device of Fig. 1. In case a fault has developed at a moment $t_f$ in a portion outside the section that is to be protected in the power system, the voltage signal V of the transformer 1 acquires a d-c value $E_{dc}$ which gradually decreases from a moment $t_0$. Therefore, signal $V_3$ of the adder 3 also acquires a d-c component as indicated by a dotted line, and a signal $V_7$ of the circuit 7 assumes a high level over several cycles. Then, the gate 5 produces the signal $V_5$ which assumes the high level for more than the time $T_1$. Accordingly, the timer 8 produces a signal $V_8$, and the timer 9 erroneously produces a signal $V_9$.

Furthermore, from CH—A—402 134 a protective circuit is known which only uses that half-wave polarity which has the shorter duration, in order to avoid measuring errors due to d-c components. For this purpose, the proper polarities are selected by an electro-mechanical selector switch. Such a selector switch requires, however, a certain time to operate, so that the overall circuit is rather slow.

It is an object of the present invention to provide a distance relay which operates properly without erroneously responding when a d-c component is superimposed on the input voltage signal due to the occurrence of faults in an external portion, and this distance relay should operate at minimum delays.

In order to solve this object, a distance relay of the kind defined is characterized by first and second timer means which generate a timer signal when the positive polarity or the negative polarity of said third voltage signal lasts for more than a second predetermined period of time; third timer means which generates an inhibit signal upon appearance of the timer signal from said first or second timer means for a third predetermined period of time; and gate means which disables the decision means to provide a protective signal when said inhibit signal is enabled.

A preferable embodiment is characterized in that said second predetermined period of time is longer than a half cycle of said voltage signal, and preferably the third predetermined period of time is longer than one cycle of said voltage signal.

The invention is now described by way of example in connection with the accompanied drawings.

Fig. 1 is a block diagram of a conventional distance relay;

Fig. 2 is a vector diagram which illustrates operational characteristics of the relay of Fig. 1;

Fig. 3 is a diagram illustrating signal waveforms of each of the portions of the relay of Fig. 1;

Fig. 4 is a block diagram of a distance relay according to an embodiment of the present invention; and

Fig. 5 is a diagram illustrating signal waveforms of each of the portions of the relay of Fig. 4.

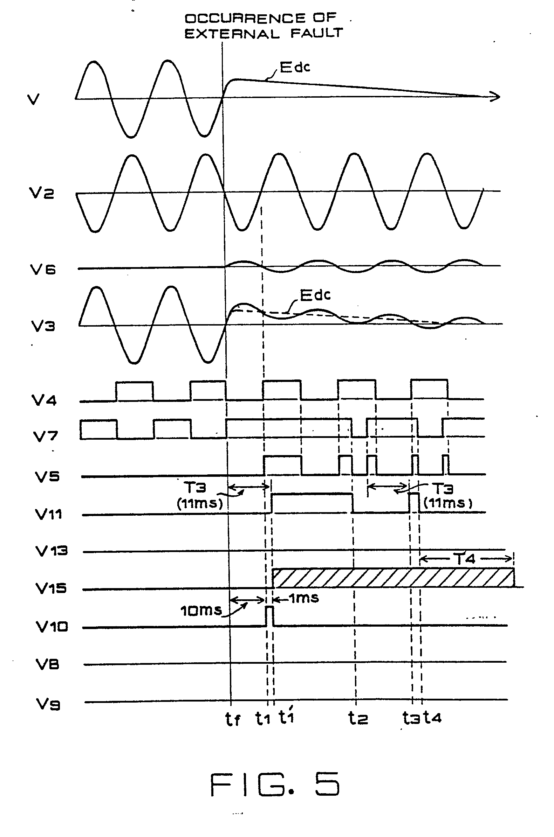

Fig. 4 is a block diagram which illustrates a preferred embodiment according to the present invention, in which the same reference numerals as those of Fig. 1 denote the same portions. In this embodiment, as mentioned above, a voltage signal V from the power system is input to the exclusive OR gate 5 via a memory 2 and a rectangular waveform shaper 4. A current signal I from the power system is also input to the exclusive OR gate 5 via a transformer 6, an adder 3 and a rectangular waveform shaper 7.

According to the present invention, a signal $V_5$ from the exclusive OR gate 5 is sent to a first input terminal of an AND gate 10. While a signal $V_7$ of the rectangular waveform shaper 7 is sent to a timer 11 and to a timer 13 via an inverter 10. The timers 11 and 13 have a delay time $T_3$ (for example, 11 milliseconds, which is longer than one-half cycle of a voltage signal V of 50 Hz), and sends output signals $V_{11}$ and $V_{13}$ to a timer 15 via an OR gate 14. The timer 15 has a delay time $T_4$ (for example, 30 milliseconds, which corresponds one and a half cycles of the voltage signal V of 50 Hz) for restoration, and sends an output signal $V_{15}$ to an inverted logic input of the AND gate 10 which produces an output signal $V_{10}$ to the timer 8. The timer 9 connected to the timer 8 in cascade, produces a final signal $V_9$ as described already.

Operation of the relay is now described with reference to the waveform diagram of Fig. 5. Before a fault develops, i.e., before the moment $t_f$, the signal $V_6$ of zero volt is input to the adder 3, consequently the rectangular signal of opposite phase of that of the signal $V_4$ is applied to the exclusive OR gate 5 so that the gate 5 provides an inactive signal $V_5$. From the moment $t_f$, however, a signal $V_3$ of the adder 3 contains a positive d-c component $E_{dc}$ to cause the rectangular waveform shaper 7 to produce a signal $V_7$ of the high level which lasts up to a moment $t_2$. The timer 11, therefore, produces a signal $V_{11}$ of the high level from a moment $t_1'$ following the lapse of the timer $R_3$ (11 milliseconds) to the moment $t_2$ to energize the timer 15, which then produces a signal $V_{15}$ of the high level. On the other hand, both of the signals $V_4$ and $V_7$ assume the high level from the moment $t_1$ following 10 milliseconds from the moment $t_f$, so that the exclusive OR gate 5 produces a signal $V_5$ of the high level to activate the first input terminal of the AND gate 10. However, since the signal $V_{15}$ assumes the high level starting from the moment $t_1'$, the second input terminal of the gate 10 is inactivated i.e. the gate 10 is inhibited by the signal $V_{15}$ of high level, and permits the signal $V_{10}$ to assume the high level for only one millisecond from the moment $t_1$. As the timer 8 has a delay time $T_1$ of 5 milliseconds, the period in which the signal $V_{10}$ assumes the high level is too short to render the signal $V_8$ to assume the high level. That means that the timer 9 does not produce the signal $V_9$ of the high level even when the d-c component $E_{dc}$ is contained in the signal V of the transformer 1, and, hence, the relay does not erroneously operate. The signal $V_{11}$ also assumes the high level during a period between the moment $t_3$ and the moment $t_4$, but never assumes the high level thereafter so that the AND gate 10 is released from being inhibited by the signal $V_{15}$ after the lapse of the time $T_4$ (30 milliseconds) from the moment.

Although the above description has dealt with the case when the invention was adapted to the directional relay having mho characteristics, it will be obvious for those skilled in the art that the invention may also be applicable to the distance relay having lens characteristics or to the distance relay having rectangular characteristics.

**Claims**

1. A distance relay having transformer means (6) which has a predetermined impedance, which introduces a current signal (I) from a circuit portion that is to be protected in a power system, and which derives a first voltage signal (V₆) consisting of the product of said impedance ($Z_S$) and said current signal (I);

arithmetic means (3) which combines a second voltage signal ($V_{1b}$, V) derived from the voltage (V) of the power system and said first voltage signal (V₆) for deriving a third voltage signal (V₇);

memory means (2) which holds said second voltage signal ($V_{1a}$, V); and

decision means (5, 8, 9) which generates a protective signal (V₉) for initiating the protective operation of the system when a phase difference between the output (V₄) from said memory means (2) and said third voltage signal (V₇) is greater than a predetermined value and lasts for more than a first predetermined period (T₁) of time; characterized by

first and second timer means (11, 13) which generates a timer signal ($V_{11}$, $V_{13}$) when the positive polarity or the negative polarity of said third voltage signal (V₇) lasts for more than a second predetermined period of time (T₃);

third timer means (15) which generates an inhibit signal ($V_{15}$) upon appearance of the timer signal ($V_{11}$, $V_{13}$) from said first or second timer means (11, 13) for a third predetermined period of time (T₄); and

gate means (10) which disables the decision means (5, 8, 9) to provide a protective signal (V₉) when said inhibit signal ($V_{15}$) is enabled.

2. A distance relay according to claim 1, characterized in that said second predetermined period of time (T₃) is longer than a half cycle of said voltage signal (V).

3. A distance relay according to claim 1 or 2, characterized in that said third predetermined period of time (T₄) is longer than one cycle of said voltage signal (V).

**Patentansprüche**

1. Distanzrelais mit Transformatormitteln (6) mit einer vorbestimmten Impedanz, welche ein Stromsignal (I) eines zu schützenden Schaltungsabschnittes in einem Energiesystem aufnehmen, und welche ein erstes Spannungssignal (V₆) ableiten, das aus dem Produkt der Impedanz ($Z_S$) mit dem Stromsignal (I) besteht;

Arithmetikmitteln (3), welche ein zweites, von der Spannung (V) des Energiesystems abgeleitetes Spannungssignal($V_{1b}$, V) mit dem ersten Spannungssignal (V₆) kombinieren, um ein drittes Spannungssignal (V) abzuleiten;

Speichermitteln (2), welche des zweite Spannungssignal ($V_{1a}$, V) halten; und mit

Entscheidungsmitteln (5, 8, 9), welche zum Initiieren des Schutzbetriebes des Systems ein Schutzsignal (V₉) erzeugen, wenn eine Phasendifferenz zwischen dem Ausgang (V₄) der Speichermittel (2) und dem dritten Spannungssignal (V₇) größer wird als ein vorbestimmter Schwellenwert und länger andauert als einen ersten vorbestimmten Zeitabschnitt (T₁),

gekennzeichnet durch

erste und zweite Zeitgebermittel (11, 13), welche ein Zeitgebersignal ($V_{11}$, $V_{13}$), erzeugen, wenn die positive oder negative Polarität des dritten Spannungssignals (V₇) länger als einen zweiten vorbestimmten Zeitabschnitt (T₃) andauert;

dritte Zeitgebermittel (15), welche ein Unterbrechungssignal ($V_{15}$) erzeugen, wenn das Zeitgebersignal ($V_{11}$, $V_{13}$) des ersten oder zeiten Zeigebermittels (11, 13) für einen dritten vorbestimmten Zeitabschnitt (T₄) auftritt; und durch

Gattermittel (10), welche die Erzeugung eines Schutzsignals (V₉) durch die Entscheidungsmittel (5, 8, 9) sperren, wenn das Unterbrechungssignal ($V_{15}$) freigegeben ist.

2. Distanzrelais nach Anspruch 1, dadurch gekennzeichnet, daß der zweite vorbestimmte Zeitabschnitt (T₃) länger ist als eine halbe Periode des Spannungssignals (V).

3. Distanzrelais nach Anspruch 1 oder 2, dadurch gekennzeichnet, daß der dritte vorbestimmte Zeitabschnitt (T₄) länger ist als eine Periode des Spannungssignals (V).

**Revendications**

1. Relais de distance comportant:

un moyen formant transformateur (6) qui possède une impédance prédéterminée, reçoit un signal de courant (I) provenant d'une section de circuit qui doit être protégee dans un réseau d'alimentation électrique, et délivre un premier signal de tension (V₆) constitué par le produit de ladite impédance ($Z_S$) et dudit signal de courant (I);

un moyen de calcul arithmétique (3) qui combine un second signal de tension ($V_{1b}$, V) dérivé de la tension (V) du réseau d'alimentation électrique et ledit premier signal de tension (V₆) pour former un troisième signal de tension (V₇);

un moyen formant mémoire (2) qui retient ledit second signal de tension ($V_{1a}$, V); et

un moyen de décision (5, 8, 9) qui engendre un signal de protection (V₉) déclenchant l'opération de protection du réseau lorsque la différence de phase entre la sorte (V₄) dudit moyen formant mémoire (2) et ledit troisième signal de tension (V₇) est supérieure à une valeur prédéterminée et se maintient sur plus d'une première période de temps prédéterminée (T₁); caractérisé par

un premier et un deuxième moyens temporisateurs (11, 13) qui engendrent un signal de temporisation ($V_{11}$, $V_{13}$) lorsque la polarité positive ou la polarité négative dudit troisième signal de tension (V₇) se maintient sur plus d'une deuxième période de temps prédéterminée (T₃);

un troisième moyen temporisateur (15) qui engendre un signal d'inhibition ($V_{15}$) lorsque le signal de temporisation ($V_{11}$, $V_{13}$) provenant desdits premier et deuxième moyens temporisateurs (11, 13) apparaît sur une troisième période de temps prédéterminée (T₄); et

un moyen formant porte (10) qui rend le moyen de décision (5, 8, 9) inapte à délivrer le signal de protection ($V_9$) lorsque ledit signal d'inhibition ($V_{15}$) est émis.

2. Relais de distance selon la revendication 1, caractérisé en ce que ladite deuxième période de temps prédéterminée ($T_3$) est d'une durée supérieure à un demi-cycle dudit signal de tension (V).

3. Relais de distance selon la revendication 1 ou 2, caractérisé en ce que ladite troisième période de temps prédéterminée ($T_4$) est d'une durée supérieure à un cycle dudit signal de tension (V).

FIG. 1

FIG. 4

1

EP 0 091 606 B1

F I G. 2

FIG. 3

FIG. 5